# EUROPEAN PATENT APPLICATION

(11) **EP 3 772 204 A1**
(43) Date of publication of application: **03.02.2021**
(21) Application number: 19189103.5
(22) Date of filing: 30.07.2019
(51) Int. Cl.: H04L 29/06, G06Q 20/10, G06F 21/62, H04W 12/00, G06Q 20/32, G06F 21/34, G06Q 20/40

(54) **SECURED VALIDATION IN NETWORK MANAGEMENT**

(71) Applicant: Nokia Solutions and Networks Oy, 02610 Espoo (FI)
(72) Inventor: COSQUER, François, 78630 Orgeval (FR); PAPILLON, Serge, 75014 PARIS (FR)
(74) Representative: Novagraaf Technologies

(57) **Abstract**

For a secured validation in management of a telecommunication network (TN), a validation server:
determines a level of sensitivity corresponding to the action and fetch validation rules from a request database (RDB), the validation rules describing a validation process and corresponding to the level of sensitivity of the action,
creates a filter for a selection of peers able to validate the action request (ReqA), the characteristics of the filter depending on the validation rules,
selects at least one peer by applying the created filter and determining at least one communication device associated with the at least one peer,
sends a context request (ReqC) to the mobile device (MD) for providing context related to the action,
receives context related to the action from the mobile device (MD),
sends a validation request (ReqV) to the at least one communication device, the validation request (ReqV) containing details of the action, the provided context of the action and a required response to validate or reject the action,
receives at least one validation response (ResV) from the at least one communication device, the validation response (ResV) containing validation or a rejection of the action,
decides if the action request (ReqA) is validated, rejected or needs to be further studied based on the at least one validation response.

## Description

### FIELD OF INVENTION

The present subject matter generally relates to the field of network management in telecommunication networks.

### BACKGROUND

During the last years the field of network management has seen a constant technological evolution: starting from management software running on dedicated hardware and accessed through remote login from simple terminals to virtualized software accessed through web browsers. The latest evolution would be for the client software of network management systems to be an application in a mobile phone.

A problem arises from the fact that the mobile phone is by nature not a secure environment. This is further aggravated when it is not a dedicated managed corporate phone but a multipurpose device, like a Bring Your Own Device (BYOD) phone. If the application supply chain or the device is compromised, attackers could easily compromise and abuse the network management application. The attackers can act as men in the middle with the ability to surf the user session of the application. This kind of situation is aggravated when user has administrator privileges.

When attacker surfs the user session of the application, authentication becomes useless, as from the application server side the correct authenticated administrator is "actually" using the application. Furthermore, attackers can display what they want to the administrator while issuing any request they want to the application server. Some possible risks from this kind of attack are impact on services, data leak, creation of a new administrator.

This major security issue cannot easily be avoided given that functionality and time to market is often considered ahead of security. As a result, network management from application running on - potentially compromised - untrusted devices is already a reality and will spread exponentially in the near future.

A mitigation action to address this security problem is request or transaction validation. The transaction validation has been addressed in the e-banking business by sending a message through "another medium" (or "separate channel" by SMS or a dedicated mobile application) to the end user restating the current transaction and asking for the end user to read and validate (by the use of a one time validation number) the transaction. If an attacker is surfing the user session and tries to perform his own (fraudulent) transaction, the end user will not recognize the (fraudulent) transaction and hopefully will not validate it. Unfortunately, this solution is not efficient when the attacker has compromised the entire mobile device of the end user, and as such has access to any validation code (be it by SMS or mobile application).

There is a need to counter those attacks that can use genuine user session for transaction validation.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a method for a secured validation in management of a telecommunication network, comprises the following steps in a validation server:
receiving an action request from a mobile device, the request containing an identifier of an action to be perform,
determining a level of sensitivity corresponding to the action and fetching validation rules from a request database, the validation rules describing a validation process and corresponding to the level of sensitivity of the action,
creating a filter for a selection of peers able to validate the action request, the characteristics of the filter depending on the validation rules,
selecting at least one peer by applying the created filter and determining at least one communication device associated with the at least one peer,
sending a context request to the mobile device for providing context related to the action,
receiving (S6) context related to the action from the mobile device,
sending a validation request to the at least one communication device, the validation request containing details of the action, the context related to the action and a required response to validate or reject the action,
receiving at least one validation response from the at least one communication device, the validation response containing validation or a rejection of the action,
deciding if the action request is validated, rejected or needs to be further studied based on the set of validation responses.

Advantageously, it is provided a new way to extend and automate in near-real time the concept of "four-eyes principle" by extending the request validation process to another employee when the request is originated from an application in a mobile terminal. It solves the initial problem as the request validation process is not done by the same end user on the same - potentially compromised - environment. The configurability of the system enables to even tackle hostile cases in which the validator (second user) operates on a compromised environment.

In an embodiment, COPY DEPENDANT CLAIMS.

In another implementation there is provided an COPY CLAIM DEVICES.

In another implementation there is provided a computer-readable medium having embodied thereon a computer program for executing a method for a secured validation in management of a telecommunication network. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a schematic block diagram of a communication system according to one embodiment of the invention for a secured validation in network management.
FIG. 2 illustrates a flow chart illustrating a method for a secured validation in network management according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

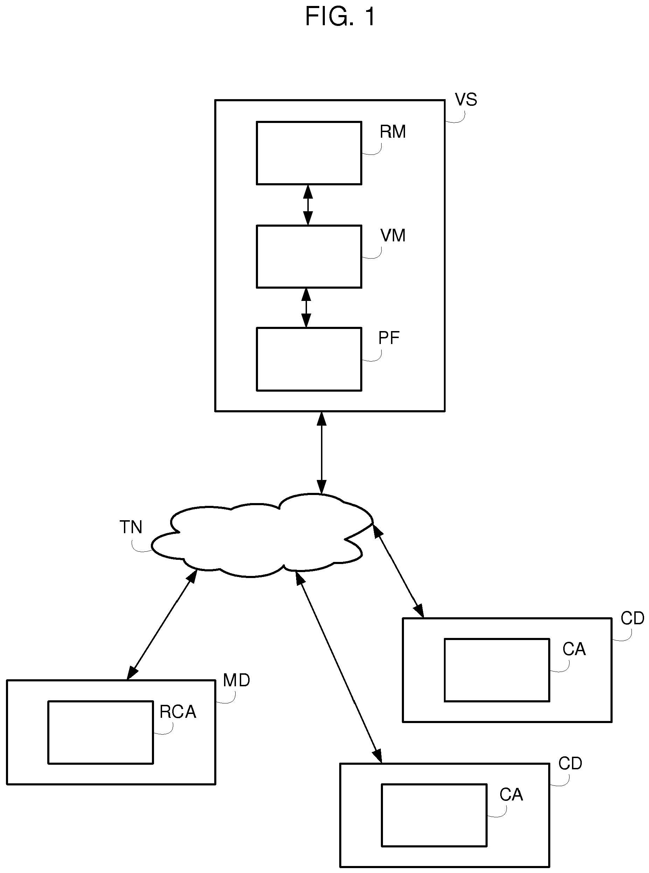

Referring to FIG. 1, a validation server VS communicates through a telecommunication network TN with a mobile device MD and at least a communication device CD.

The telecommunication network TN may be a wired or wireless network, or a combination of wired and wireless networks. The telecommunication network TN can be associated with a packet network, for example, an IP ("Internet Protocol") high-speed network such as the Internet or an intranet, or even a company-specific private network.

The telecommunication network TN is for example a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type. Furthermore, the wireless telecommunication network TN can be accessed by the mobile device via a wireless link, such as a Wi-Fi network or Bluetooth connection.

In another example, the telecommunication network TN is a public wireless network of limited scope, such as WLAN (Wireless Local Area Network) or conforming to a standard 802.1x, or medium range according to the protocol WiMAX (World Wide Interoperability Microwave Access.

Additionally, the telecommunication network TN may be operating in accordance with fourth or fifth generation wireless communication protocols and/or the like as well as similar wireless communication protocols that may be developed in the future.

The validation server VS is managed by the operator of the telecommunication network It can be implemented as a standalone module, being an overlay interface of legacy network management systems, or as an integrated module of a network management system that can be linked to an access control module of the network management system.

The mobile device MD is capable of establishing a communication within a telecommunication network TN, for example with the communication device, via a radio link with the base station. For instance, the communication device is a mobile phone, a smartphone, a tablet, or any portable telecommunication device.

The mobile device MD runs a remote client application RCA dedicated to the management of the telecommunication network. The remote client application RCA is a mobile application designed to communicate with the validation server VS.

The communication device CD is also capable of establishing a communication within a telecommunication network TN, for example with the mobile device. The communication device CD is for example a user equipment, mobile phone, tablet, a personal computer or any other user device.

The communication device CD runs a client application CA dedicated to the management of the telecommunication network. The nature of the client application CA depends of the type of the communication device, for example can be a mobile application if the communication device is a smartphone or can be a software if the communication device is a computer.

The mobile device MD or the communication device CD may comprise a user interface, comprising at least one of a display, a keyboard, a touchscreen, a vibrator arranged to signal to a user by causing the device to vibrate, a speaker and a microphone. A user may be able to operate the device via the user interface, for example to accept incoming telephone calls, to originate telephone calls or video calls, to browse the Internet, to manage digital files stored in a memory or on a cloud accessible via a transmitter and a receiver.

The validation server VS contains a request manager RM, a validation manager VM and a peer finder PF.

The request manager RM is able to handle action request from a communication device and to fetch from a request database RDB validation rules that describe the validation process corresponding to the sensitivity of the request. The request manager RM is responsible for launching the validation manager VM with the validation rules and for handling the request validation exchanges with the peers corresponding to the mobile device MD and one or more communication devices CD.

The validation manager VM executes the logic of a validation process for one request based on the validation rules passed by the request manager. The validation manager VM creates filters for peers and selects the peers needed to validate a request from the peer finder PF. The validation manager VM can ask the request issuer (i.e. the mobile device) for the context of the request.

The validation manager VM decides from the response(s) whether the action request is validated or rejected. The response can be further studied if the context given by the request issuer should be more precise : the request manager has thus to ask the request issuer for more precise context and another round of validation is launched.

The peer finder PF finds out at least a peer (communication device) that is connected or on-duty and that is able to validate a request, the peer searching being based on the filter given by the validation manager. The peer finder PF uses information stored in a dynamic peer database PD. The characteristics of the filter may contain: availability (regular work hours, on duty admin, connected admin, reachable), access rights (at least the right to perform the same operation as the requested one), software interface type (mobile application, software on a managed laptop, or dedicated security operation center).

When a request is flagged with a pre-defined sensitivity level, the validation server VS can automatically identify another employee with similar access rights as the initial issuer and operating in a pre-defined specific trusted environment forward the request for validation.

In most situations, the second employee will need to have the context of the request before triggering validation. The notion of "context" of a request can be as specific as needed. In the case of network management, part of this context is already in the system and accessible via the network management system itself and cannot easily be tampered with e.g. getting the state of the target system to understand whether the action request is justified or not. This verification step is implemented by prompting the issuer to complete his request with an additional context.

From a security point of view, the format of such a context does not need to be constraint. It could be text, audio or video recording for instance. It must convey sufficient information for another administrator having at least the same access right and responsibilities as the request issuer to understand the situation, verify the situation and be ready to engage his responsibility in validating the request.

The validation server VS is configurable to enforce different levels of validation process depending on the pre-defined sensitivity of the request. For instance, if the request is highly sensitive, the validation server VS could even look for a validator that is currently logged on a trusted environment (i.e. not via a mobile application).

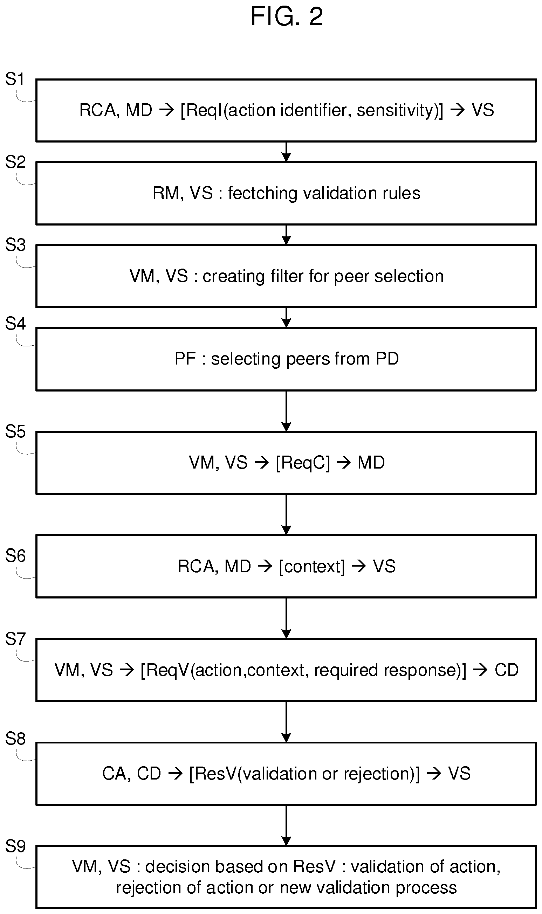

With reference to FIG. 2, a method for a secured validation in network management according to one embodiment of the invention comprises steps S1 to S9.

In step S1, a user of a mobile device MD wishes to perform an action on the network management via the remote client application RCA as mobile application implemented in the mobile device MD. The remote client application RCA sends an action request ReqA to the validation server VS, the action request ReqA containing an identifier of the action to be perform. Optionally the action request ReqA contains an identifier of session if several sequential actions are planned : the sequential actions may be of same type and then easier to manage if indicated in a same session.

In step S2, the request manager RM of the validation server VS identifies a level of sensitivity of the action, this level of sensitivity being for example retrieved from a database linking all possible actions and their corresponding levels of sensitivity. The request manager RM fetches validation rules corresponding to the level of sensitivity of the action from a request database RDB. The validation rules describes characteristics of a filter for a selection of peers and a validation process expressing the behavior of the validation manager VM in case of request validation rejection by at least one peer. The request manager RM transmits the validation rules to the validation manager VM.

In step S3, the validation manager VM creates filter for a selection of peers able to validate the action request ReqA. Some characteristics of the filter may be: availability of the peer (regular work hours, on duty admin, connected admin, reachable), access rights of the peer (at least the right to perform the same action as the user of the mobile device), software interface type of the communication device of the peer (mobile application, software on a managed laptop, or dedicated security operation center). The characteristics of the filter are described in the validation rules. If there is an identifier of session, the validation manager VM may identify a peer having already been contacted for validation for a similar type of action, for example by looking at historical data.

In step S4, the validation manager VM transmits the created filter to the peer finder PF and ask the peer finder to select one or more peers by applying the created filter. The peer finder interrogates the peer database PD containing presence data of peers, access rights of peers and information on trust of equipment and software used by peers. The peer finder PF selects a set of peers and transmits information on the set of peers to the validation manager VM, the set of peers corresponding to at least one peer. The validation manager VM determines the communication device CD associated with each peer and a way to contact the communication device CD based on said information.

In step S5, the validation manager VM sends a context request ReqC to the mobile device MD for providing more context related to the action, depending on the sensitivity of the action. If the action request ReqA does not contain context of the action or if the validation manager VM determines that the context of the action contained in the action request ReqA is not sufficient with respect to the sensitivity of the action, the validation manager VM sends a context request ReqC to the mobile device MD.

In step S6, once the mobile device receives the context request ReqC, the user provides the context of the action, in a given format like text, audio or video, through a user interface of the mobile device. The context of the action should contain information to understand the situation of the action and why validation is required for the action. The remote client application RCA creates the context of the action from inputs given by the user. The remote client application RCA sends the provided context to the validation server VS.

In step S7, the validation manager VM ask the request manager RM to contact the selected set of peers. The request manager RM sends a validation request ReqV to the communication device of each peer, the validation request ReqV containing details of the action, the provided context of the action and a required response to validate or reject the action. Details of the action can be automatically enriched by the validation manager VM from a repository listing characteristics of the action.

In step S8, for each contacted peer, the client application CA of the communication device CD provides the information contained in the received validation request ReqV to the peer. Each contacted peer decides to validate or reject the action in view of the information contained in the validation request. The client application CA of the communication device CD sends a validation response ResV to the the request manager RM of the validation server VS, the validation response ResV containing a validation or a rejection of the action. Optionally, the peer provides reason in case of rejection. The reason of rejection can be selected in a pre-established list (including for example insufficient context, unjustified action) or provided in a free field. The use of a pre-established list is useful to automatize the validation process, for example if the reason is an insufficient context then asking the user of the mobile device MD for more precise context. If the reason of rejection is provided in a free field, a semantic analysis may be done to classify the reason and take it into account in the validation process.

In step S9, the validation manager VM of the validation server VS takes a decision based on the validation responses ResV received from the set of peers. If the decision is negative, the validation server VS sends a response to the mobile device MD, the response indicating a rejection of the requested action. If the decision is positive, the validation server VS sends a request to a network management system, the response indicating a validation of the requested action. The network management system then sends a response to the mobile device MD, the response indicating a validation of the requested action that can thus be performed.

The validation server VS can also take a decision for a new round of exchange with the mobile device and/or the communication device according to steps S5 to S8, the decision being based on the validation process of the validation rules.

In one embodiment, an action corresponds to a set of sub-actions and different peers may be selected for one or more sub-actions. Each peer may be selected based on different characteristics of the filter and each selected peer may have to validate or reject one or several sub-actions. For example, the validation server VS may determine different level of sensitivity for the sub-actions and thus select a different set of peers for each determined level of sensitivity for the sub-actions.

In one example, one peer has been selected depending on some characteristics like: being connected and available (information get thanks to a presence server), access control rights being enough (information got from the peer database), current software interface type (mobile application, software on a managed laptop, or SOC) being sufficiently trusted. The peer has been contacted with the context of the request, and has validated the request, judging that the context was verifiable and relevant. In one embodiment, no generic context should be allowed in order to avoid replay attacks.

In another example, the validation process expressed by the validation rules can be much more complex and express all the behaviour in case of request validation rejection and/or subsequent peer validation: several administrator peers have been selected and contacted with the request and the context and at least one of the peers has rejected the request.

The validation rules express the validation algorithm taking into account the number of peers having accepted and their trust level (access right level, software interface type), the number of peers having rejected and their trust level (access right level, software interface type), and the reason for rejection (insufficient context, unjustified action).

The decision of the validation server could be: accept the request, reject the request, or launch another round for validation requests to either the same peers or different ones (with same or different filters), by eventually asking the request issuer to precise context.

The validation server is advantageously able to tackle the major security issue of performing high risk management from untrusted devices. The validation server is highly configurable and may address all kinds of security policy and posture: only the high risk request will trigger an additional validation.

The fact that the validators (peers) can themselves be compromised is addressed by the agility of the solution : in any case, a compromised validator can only reject a genuine operation, which limits the nuisance on the operations. Also the validation server enables multiple users validation process in which many validators can be involved, thus further reducing nuisance of an isolated compromised validator.

An embodiment comprises a validation server VS, a mobile device or a communication device CD under the form of an apparatus comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method for a secured validation in management of a telecommunication network (TN), the method comprising the following steps in a validation server (VS):
receiving (S1) an action request (ReqA) from a mobile device, the request containing an identifier of an action to be perform,
determining a level of sensitivity corresponding to the action and fetching (S2) validation rules from a request database (RDB), the validation rules describing a validation process and corresponding to the level of sensitivity of the action,
creating (S3) a filter for a selection of peers able to validate the action request (ReqA), the characteristics of the filter depending on the validation rules,
selecting (S4) at least one peer by applying the created filter and determining at least one communication device associated with the at least one peer,
sending (S5) a context request (ReqC) to the mobile device (MD) for providing context related to the action,
receiving (S6) context related to the action from the mobile device (MD),
sending (S7) a validation request (ReqV) to the at least one communication device, the validation request (ReqV) containing details of the action, the context related to the action and a required response to validate or reject the action,
receiving (S8) at least one validation response (ResV) from the at least one communication device, the validation response (ResV) containing validation or a rejection of the action,
deciding (S9) if the action request (ReqA) is validated, rejected or needs to be further studied based on the set of validation responses (ResV).

2. The method as claimed in claim 1, wherein the action to be performed corresponds to an operation on network resources via a network management system.

3. The method as claimed in claim 1 or 2, wherein if the action request (ReqA) is validated, the validation server (VS) sends a request to a network management system, the request indicating a validation of the requested action.

4. The method as claimed in any of the claims 1 to 3, wherein if the action request (ReqA) is rejected, the validation server (VS) sends a response (ResA) to the mobile device (MD), the response indicating a rejection of the requested action.

5. The method as claimed in any of the claims 1 to 4, wherein if the action request (ReqA) needs to be further studied based on the at least one validation response (ResV), the validation server (VS) sends another context request (ReqC) to the mobile device (MD) for providing more precise context related to the action and receives more precise context related to the action from the mobile device (MD).

6. The method as claimed in claim 5, wherein if the action request (ReqA) needs to be further studied based on the at least one validation response (ResV), the validation server (VS) sends another validation request (ReqV) to the at least one communication device, the validation request (ReqV) containing details of the action, the provided context of the action and a required response to validate or reject the action.

7. The method as claimed in any of the claims 1 to 6, wherein the validation response (ResV) further contains a reason in case of rejection.

8. The method as claimed in any of the claims 1 to 7, wherein the filter depends on at least one of the following : availability of the peer, access rights of the peer, software interface type of the communication device of the peer.

9. The method as claimed in any of the claims 1 to 8, wherein the validation rules express a validation process taking into account a number of peers having validated and rejected the requested action and their respective access right level and software interface type, for launching another round for validation requests to either the same peers or different ones.

10. The method as claimed in any of the claims 1 to 9, wherein the context related to the action is provided through a user interface of the mobile device in a format as text, audio or video.

11. A method for a secured validation in management of a telecommunication network (TN), the method comprising the following steps:
sending (S1), at a mobile device (MD) to a validation server (VS), a request (Reql) containing an identifier of an action to be perform,
receiving (S5), at the mobile device (MD) from the validation server (VS), a context request for providing context related to the action,
creating (S6), at the mobile device (MD), a context related to the action from inputs given by the user of the mobile device and sending (S6), at the mobile device (MD) to the validation server (VS), the context related to the action,
receiving (S7), at a communication device (CD) from the validation server (VS), a validation request (ReqV) containing details of the action, the context related to the action and a required response to validate or reject the action, the communication device being selected by the validation server at least according to a level of sensitivity of the action,
sending (S8), at the communication device (CD) to the validation server (VS), a validation response (ResV) containing validation or a rejection of the action,
receiving (S9) at the mobile device (MD), a response containing validation or a rejection of the action.

12. A validation server (VS) for a secured validation in management of a telecommunication network (TN), the validation server comprising:
one or more network interfaces to communicate with a network;
a processor coupled to the network interfaces and configured to execute one or more processes; and
a memory configured to store a process executable by the processor, the process when executed operable to:
receive an action request (ReqA) from a mobile device, the request containing an identifier of an action to be perform,
determine a level of sensitivity corresponding to the action and fetch validation rules from a request database (RDB), the validation rules describing a validation process and corresponding to the level of sensitivity of the action,
create a filter for a selection of peers able to validate the action request (ReqA), the characteristics of the filter depending on the validation rules,
selecting at least one peer by applying the created filter and determining at least one communication device associated with the at least one peer,
sending a context request (ReqC) to the mobile device (MD) for providing context related to the action,
receiving context related to the action from the mobile device (MD),
sending a validation request (ReqV) to the at least one communication device, the validation request (ReqV) containing details of the action, the context related to the action and a required response to validate or reject the action,
receiving at least one validation response (ResV) from the at least one communication device, the validation response (ResV) containing validation or a rejection of the action,
decide if the action request (ReqA) is validated, rejected or needs to be further studied based on the at least one validation response (ResV).

13. A system (MD; CD) for a secured validation in management of a telecommunication network (TN), the system comprising:
a mobile device (MD) for sending to a validation server (VS), a request (Reql) containing an identifier of an action to be perform,
the mobile device (MD) for receiving from the validation server (VS), a context request for providing context related to the action,
the mobile device (MD) for creating a context related to the action from inputs given by the user of the mobile device and for sending to the validation server (VS), the context related to the action,
a communication device (CD) for receiving from the validation server (VS), a validation request (ReqV) containing details of the action, the context related to the action and a required response to validate or reject the action, the communication device being selected by the validation server at least according to the level of sensitivity of the action,
the communication device (CD) for sending to the validation server (VS), a validation response (ResV) containing validation or a rejection of the action,
the mobile device (MD) for receiving a response containing validation or a rejection of the action.

14. A computer-readable medium having embodied thereon a computer program for executing a method for a secured validation in management of a telecommunication network according to any of claims 1 to 10 orl 1.
